# EUROPEAN PATENT APPLICATION

(11) **EP 2 444 776 A1**
(43) Date of publication of application: **25.04.2012**
(21) Application number: 09846196.5
(22) Date of filing: 19.06.2009
(51) Int. Cl.: G01C 21/00, H04M 1/274

(54) **TELEPHONE BOOK DATA SHARING SYSTEM, NAVIGATION DEVICE, TERMINAL DEVICE, PROGRAM, AND STORAGE MEDIUM**

(71) Applicant: Pioneer Corporation, Kanagawa 212-0031 (JP)
(72) Inventor: MURATA, Toshiyuki, Kawagoe-shi Saitama 350-8555 (JP); MORINAGA, Masahiko, Kawagoe-shi Saitama 350-8555 (JP); YAMAMOTO, Kentaro, Tokyo 153-8654 (JP)
(74) Representative: Haley, Stephen
(86) International application number: PCT/JP2009/061199
(87) International publication number: WO 2010/146703

(57) **Abstract**

A telephone directory data sharing system, includes a mobile terminal and a navigation device. The mobile terminal includes an information obtaining unit, a telephone directory data generating unit, and a telephone directory data supplying unit. The information obtaining unit obtains objective information including latitude-longitude information based on an external input. The telephone directory data generating unit generates telephone directory data in which the latitude-longitude information is inserted into a field of a name and/or a field of a telephone number. The navigation device includes a telephone directory data obtaining unit and a latitude-longitude information extracting unit. The telephone directory data obtaining unit obtains the telephone directory data supplied from the terminal device. The latitude-longitude information extracting unit extracts the latitude-longitude information from the obtained telephone directory data.

## Description

### Technical Field

The present invention relates to a technology for exchanging telephone directory data including latitude-longitude information.

### Background Technique

Conventionally, there is a technique which records and shares positional information, such as latitude-longitude information, as telephone directory data in addition to its name and its telephone number. For example, in Patent Preference-1, there is disclosed a technique which receives telephone directory data including fields of geographic coordinates from a mobile phone and which executes a map display based on the geographic coordinates.

Patent Preference-1: Japanese Patent Application Laid-open under No. 2005-003431

### Disclosure of Invention

### PROBLEM TO BE SOLVED BY THE INVENTION

According to Patent Reference-1, a navigation device can obtain the telephone directory data including the positional information from the mobile phone and use it. In Patent Reference-1, fields dedicated to the geographic coordinates are provided in the telephone directory data. However, generally, there is a case where the fields of the geographic coordinates do not exist in a format of telephone directory data stored in a navigation device. Therefore, in this case, there is a possibility that the navigation device discards information of the geographic coordinates included in the telephone directory data at the time of storing it in its own memory. In Patent Reference-1, the above problem is not considered at all.

The present invention has been achieve in order to solve the above problem. It is an object of this invention to provide a telephone directory data sharing system capable of certainly sharing telephone directory data including latitude-longitude information.

### MEANS FOR SOLVING THE PROBLEM

In the invention according to claim 1, there is provided a telephone directory data sharing system including a terminal device which stores telephone directory data in a predetermined format; and a navigation device which exchanges telephone directory data with the terminal device by an electromagnetic means, wherein the terminal device includes: an information obtaining unit which obtains objective information including latitude-longitude information based on an external input; a telephone directory data generating unit which generates telephone directory data, in which the latitude-longitude information is inserted into a field of a name and/or a field of a telephone number, based on the objective information; and a telephone directory data supplying unit which supplies the telephone directory data to the navigation device, and wherein the navigation device includes: a telephone directory data obtaining unit which obtains the telephone directory data supplied from the telephone directory data supplying unit; and a latitude-longitude information extracting unit which extracts the latitude-longitude information from the telephone directory data which is obtained.

In the invention according to claim 6, there is provided a navigation device which is supplied with telephone directory data, in which latitude-longitude information is inserted into a field of a name and/or a field of a telephone number, from a terminal device by an electromagnetic means, including: a telephone directory data obtaining unit which obtains the telephone directory data from the terminal device,; and a latitude-longitude information extracting unit which extracts the latitude-longitude information from the telephone directory data.

In the invention according to claim 10, there is provided a terminal device which exchanges telephone directory data with a navigation device by an electromagnetic means, including: an information obtaining unit which obtains objective information including latitude-longitude information based on an external input; a telephone directory data generating unit which generates telephone directory data, in which the latitude-longitude information is inserted into a field of a name and/or a field of a telephone number, based on the objective information; and a telephone directory data supplying unit which supplies the telephone directory data to the navigation device.

In the invention according to claim 12, there is provided a program executed by a navigation device supplied with telephone directory data, in which latitude-longitude information is inserted into a field of a name and/or a field of a telephone number, from a terminal device by an electromagnetic means, making the navigation devicefunction as:a telephone directory data obtaining unit which obtains the telephone directory data from the terminal device; and a latitude-longitude information extracting unit which extracts the latitude-longitude information from the telephone directory data.

In the invention according to claim 13, there is provided a program executed by a terminal device which exchanges telephone directory data with a navigation device by an electromagnetic means, including: an information obtaining unit which obtains objective information including latitude-longitude information based on an external input; a telephone directory data generating unit which generates telephone directory data, in which the latitude-longitude information is inserted into a field of a name and/or a field of a telephone number, based on the objective information; and a telephone directory data supplying unit which supplies the telephone directory data to the navigation device.

### BRIEF DESCRIPTION OF THE DRAWINGS

FIG. 1 shows one example of a schematic configuration of a telephone directory data sharing system according to the embodiment;
FIG. 2 is one example of the function blocks of the telephone directory data sharing system according to the embodiment;
FIGS. 3A and 3B are examples of the formats of the telephone directory data which the mobile terminal stores;
FIG. 4 is one example of a part of the format of PBAP.
FIG. 5 is one example of the format of the telephone directory data which the navigation device stores;
FIG. 6 shows a display example which the navigation device outputs; and
FIG. 7 is one example of a flow chart which shows a procedure of the process in the embodiment.

### DETAILED DESCRIPTION OF THE PREFERRED EMBODIMENTS

According to one aspect of the present invention, there is provided a telephone directory data sharing system including: a terminal device which stores telephone directory data in a predetermined format; and a navigation device which exchanges telephone directory data with the terminal device by an electromagnetic means, wherein the terminal device includes: an information obtaining unit which obtains objective information including latitude-longitude information based on an external input; a telephone directory data generating unit which generates telephone directory data, in which the latitude-longitude information is inserted into a field of a name and/or a field of a telephone number, based on the objective information; and a telephone directory data supplying unit which supplies the telephone directory data to the navigation device, and wherein the navigation device includes: a telephone directory data obtaining unit which obtains the telephone directory data supplied from the telephone directory data supplying unit; and a latitude-longitude information extracting unit which extracts the latitude-longitude information from the obtained telephone directory data.

The above telephone directory data sharing system includes a terminal device and a navigation device. The terminal device is a mobile phone or PC (Personal Computer) and stores telephone directory data in a predetermined format. The navigation device exchanges the telephone directory data with the terminal device by an electromagnetic means. The term "electromagnetic means" herein includes a wireless communication, a wired communication through a cable, an input-output by a recording medium, and other electromagnetic means capable of exchanging the telephone directory data.

The above terminal device includes a information obtaining unit, a telephone directory data generating unit, and a telephone directory data supplying unit. The information obtaining unit obtains objective information including latitude-longitude information based on an external input. The term "external input" herein indicates an input based on a user operation of the terminal device. Also, the term "objective information" herein indicates information obtained by retrieval via a communication network such as the Internet and by other means, and includes a personal name, a store name, a geographical name, these telephone numbers, and latitude-longitude information, for example. The term "latitude-longitude information" herein indicates information specifying latitude and longitude by a numerical value, for example, and also indicates other information for specifying a position. The telephone directory data generating unit generates telephone directory data in which the latitude-longitude information is inserted into a field of a name and/or a field of a telephone number. Generally, various kinds of formats of the telephone directory data exist, and fields which are components of the telephone directory data are defined variously depending on a device storing the telephone directory data. However, the telephone directory data necessarily includes a field which stores information of a name and a field which stores information of a telephone number according to any definition because of its inherent role and function. Therefore, the telephone directory data generating unit certainly supplies the latitude-longitude information to the navigation device and can let the navigation device utilize it. The telephone directory data supplying unit supplies the generated telephone directory data to the navigation device by the above-mentioned electromagnetic means.

The above navigation device includes a telephone directory data obtaining unit and a latitude-longitude information extracting unit. The telephone directory data obtaining unit obtains telephone directory data supplied from the terminal device by an electromagnetic means. The latitude-longitude information extracting unit extracts latitude-longitude information from the obtained telephone directory data. Thereby, the navigation device can certainly obtain the latitude-longitude information from the terminal device and utilize it. For example, after that time, the navigation device executes a map display based on the latitude-longitude information, and registers the point where the latitude-longitude information indicates on the map, and sets it as a destination and/or a transit point. As described above, the telephone directory data sharing system can let the terminal device and the navigation device share the telephone directory data including the latitude-longitude information properly and synchronize the telephone directory data.

In a manner of the above telephone directory data sharing system, the telephone directory data generating unit arranges the latitude-longitude information to follow information of the name or the telephone number and adds a symbol for distinguishing the latitude-longitude information from the name or the telephone number to front and/or back of the latitude-longitude information, in case of inserting the latitude-longitude information, into the field. Thereby, the terminal device can let the navigation device distinguish between the name or the telephone number and the latitude-longitude information properly.

In another manner of the above telephone directory data sharing system, the navigation device further includes a storage unit; and a telephone directory data storing unit which generates new telephone directory data by extracting the field of the name and the field of the telephone number from the telephone directory data obtained by the telephone directory data obtaining unit and which stores the new telephone directory data in the storage unit. According to the above telephone directory data sharing system, the navigation device can certainly store and utilize the latitude-longitude information without discarding the latitude-longitude information even in the case where only the field of the name and the field of the telephone number are stored as the telephone directory data.

In another manner of the above telephone directory data sharing system, the navigation device further includes: a display unit; and a display control unit which displays a list of the telephone directory data stored in the storage unit and which adds a display for identifying whether or not the latitude-longitude information is included to each item of the list. Thereby, the navigation device can let the user identify whether or not a displayed list of the telephone directory data includes the latitude-longitude information and improve the usability. Concretely, at the time of the subsequent operation, the navigation device can prevent an incorrect operation which indicates a map display even though the user has an intention to make a phone call or an incorrect operation which indicate making a phone call even though the user has an intention to execute a map display, for example.

In another manner of the above telephone directory data sharing system, the display control unit executes a map display on the display unit based on the latitude-longitude information in a case where the latitude-longitude information is included in an item designated from the list based on an external input. After that time, for example, the navigation device accepts an operation of a destination setting or a transit point setting. In this way, the navigation device can utilize the latitude-longitude information obtained from the terminal device.

According to another aspect of the present invention, there is provided a navigation device which is supplied with telephone directory data, in which latitude-longitude information is inserted into a field of a name and/or a field of a telephone number, from a terminal device by an electromagnetic means, including: a telephone directory data obtaining unit which obtains the telephone directory data from the terminal device; and a latitude-longitude information extracting unit which extracts the latitude-longitude information from the telephone directory data.

The above navigation device is supplied with the telephone directory data, in which the latitude-longitude information is inserted into a field of a name and/or a field of a telephone number, from a terminal device by an electromagnetic means. Also, the navigation device includes a telephone directory data obtaining unit and a latitude-longitude information extracting unit. The telephone directory data obtaining unit obtains the telephone directory data from the terminal device by an electromagnetic means. The latitude-longitude information extracting unit extracts the latitude-longitude information from the obtained telephone directory data. Thereby, the navigation device can obtain the latitude-longitude information from the terminal device and utilize it. After that time, for example, the navigation device executes a map display based on the latitude-longitude information, and registers the point where the latitude-longitude information indicates on the map, and sets it as a destination and/or a transit point.

In a manner of the above navigation device, the navigation device further includes a storage unit; and a telephone directory data storing unit which generates new telephone directory data by extracting the field of the name and the field of the telephone number from the telephone directory data obtained by the telephone directory data obtaining unit and which stores the new telephone directory data in the storage unit.

In another manner of the above navigation device, the navigation device further includes a display unit; and a display control unit which displays a list of the telephone directory data stored in the storage unit and which adds a display for identifying whether or not the latitude-longitude information is included to each item of the list.

In another manner of the above navigation device, the display control unit executes a map display on the display unit based on the latitude-longitude information in a case where the latitude-longitude information is included in an item designated from the list based on an external input.

According to another aspect of the present invention, there is provided a terminal device which exchanges telephone directory data with a navigation device by an electromagnetic means, including: an information obtaining unit which obtains objective information including latitude-longitude information based on an external input; a telephone directory data generating unit which generates telephone directory data, in which the latitude-longitude information is inserted into a field of a name and/or a field of a telephone number, based on the objective information; and a telephone directory data supplying unit which supplies the telephone directory data to the navigation device.

The above terminal device includes an information obtaining unit, a telephone directory data generating unit, and a telephone directory data supplying unit. The information obtaining unit obtains objective information including latitude-longitude information based on an external input. The telephone directory data generating unit generates telephone directory data in which the latitude-longitude information is inserted into a field of a name and/or a field of a telephone number. Generally, various kinds of formats of the telephone directory data exist, and fields which are components of the telephone directory data are defined variously depending on a device storing the telephone directory data. However, the telephone directory data necessarily includes a field which stores information of a name and a field which stores information of a telephone number according to any definition because of its inherent role and function. Therefore, the telephone directory data generating unit certainly supplies the latitude-longitude information to the navigation device and can let the navigation device utilize it. The telephone directory data supplying unit supplies the generated telephone directory data to the navigation device by the above-mentioned electromagnetic means.

In a manner of the above terminal device, the telephone directory data generating unit adds a symbol for distinguishing the latitude-longitude information from the name or the telephone number to front and/or back of the latitude-longitude information in case of inserting the latitude-longitude information into the field.

According to another aspect of the present invention, there is provided a program executed by a navigation device supplied with telephone directory data, in which latitude-longitude information is inserted into a field of a name and/or a field of a telephone number, from a terminal device by an electromagnetic means, making the navigation device function as: a telephone directory data obtaining unit which obtains the telephone directory data from the terminal device; and a latitude-longitude information extracting unit which extracts the latitude-longitude information from the telephone directory data. By the above program being installed, the navigation device can certainly obtain the latitude-longitude information from the terminal device and utilize it. It is noted that the above program is recorded by a recording medium.

According to another aspect of the present invention, there is provided a program executed by a terminal device which exchanges telephone directory data with a navigation, device by an electromagnetic means, including: an information obtaining unit which obtains objective information including latitude-longitude information based on an external input; a telephone directory data generating unit which generates telephone directory data, in which the latitude-longitude information is inserted into a field of a name and/or a field of a telephone number, based on the objective information; and a telephone directory data supplying unit which supplies the telephone directory data to the navigation device. By the above program being installed, the navigation device can certainly supply the latitude-longitude information to the navigation device and let the navigation device utilize it. It is preferred that the above program is recorded on a recording medium.

### EMBODIMENT

A Preferred embodiment of the present invention will be explained hereinafter with reference to the drawings. Hereinafter, after a schematic configuration of a telephone directory data sharing system in the present invention is explained, a description will be given of a content of a process executed by the telephone directory data sharing system and a flow of the process. Subsequently, each modification which is relevant to the embodiment will be described below.

It is noted that the term "telephone directory data" hereinafter includes a name (hereinafter simply referred to as "name") such as a personal name, a store name and a geographical name, and their telephone numbers, and other data in which information related to the name is integrated in a predetermined format.

### (Schematic Configuration)

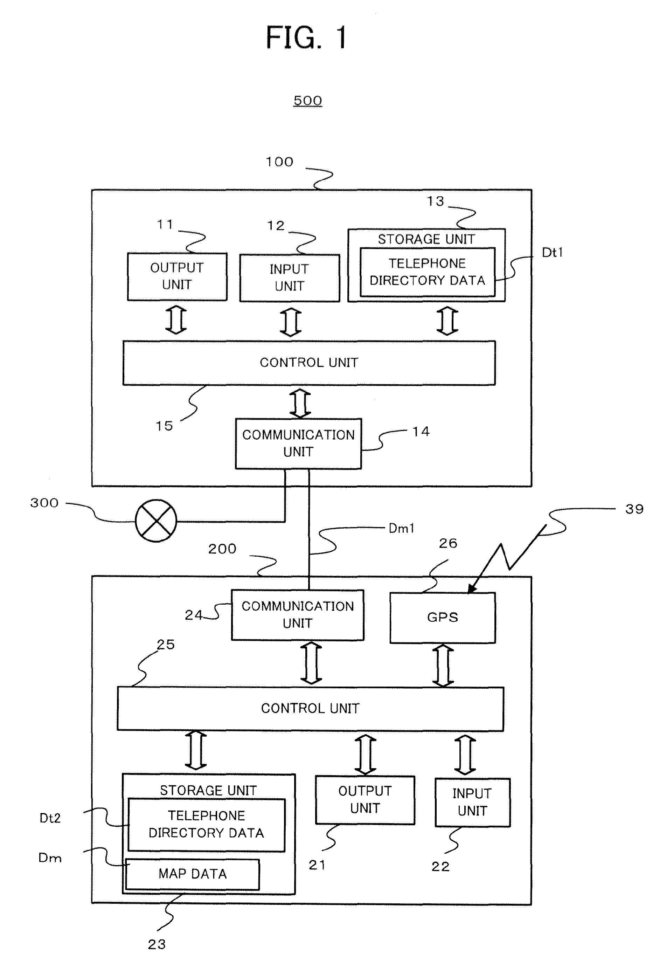

First, a description will be given of a schema of the system in the present invention with reference to FIG. 1. FIG. 1 shows an example of a schematic configuration of a telephone directory data sharing system 500. As shown in FIG. 1, the telephone directory data sharing system 500 includes a mobile terminal 100 and a navigation device 200. In the telephone directory data sharing system 500, the mobile terminal 100 adds latitude-longitude information (hereinafter referred to as "latitude-longitude information Is") obtained by searching a communication network 300 such as the Internet to the telephone directory data and sends them to the navigation device 200. The above-mentioned search is a keyword search which a user (hereinafter simply referred to as "terminal user") of the mobile terminal 100 conducts by using a browsing software.

Hereinafter, each description will be given of a schematic configuration of the mobile terminal 100 and a schematic configuration of the navigation device 200.

First, the schematic configuration of the mobile terminal 100 will be described below. The mobile terminal 100 includes an output unit 11, an input unit 12, a storage unit 13, a communication unit 14, and a control unit 15. Each component of the mobile terminal 100 is connected to each other via a bus which is not shown in the drawing and configured to transmit necessary information among each component.

The output unit 11 outputs information for responding to operations by the terminal user. Concretely, the output unit 11 outputs an image or a moving image and/or executes an audio output based on the control of the control unit 15.

The input unit 12 is an interface accepting the input, i.e., the operation of a necessary command or information which the terminal user conducts to the mobile terminal 100. Concretely, the input unit 12 is made of keys, switches, buttons, and/or, a voice input unit for inputting each kind of commands and data.

The storage unit 13 is configured to store programs for controlling behaviors of the mobile terminal 100 and store necessary information for the behaviors of the mobile terminal 100. Especially, in the embodiment, the storage unit 13 stores the telephone directory data in the vCard format as one example. Hereinafter, the telephone directory data stored in the storage unit 13 and the telephone directory data according to the format in which the storage unit 13 stores the telephone directory data, i.e., the telephone directory data according to the vCard format is referred to as "telephone directory data Dt1".

The communication unit 14 sends and/or receives the data to and/or from other devices according to a predetermined protocol. Especially, in the embodiment, the communication unit 14 receives necessary information (hereinafter referred to as "objective information Io") for generating the telephone directory data Dt1 via the communication network 300. The objective information Io includes a name, the latitude-longitude information Is of the name, and the telephone number corresponding to the name. Also, the communication unit 14 communicates with the navigation device 200 in conformity with the communication protocol of Bluetooth (registered trademark). Concretely, the communication unit 14 sends the telephone directory data Dt1 to the navigation device 200 by using PBAP (Phone Book Access Profile) which defines the automated transfer of telephone directory data.

The control unit 15 includes a CPU (Central Processing Unit), a ROM (Read Only Memory), and a RAM (Random Access Memory) which are not shown, and executes various kinds of controls of each component in the mobile terminal 100. The control unit 15 is one example of each of the information obtaining unit, the telephone directory data generating unit, and the telephone directory data supplying unit in the present invention as described below. The concrete process executed by the control unit 15 is described in detail in the below section "Control Method".

Next, a description will be given of a schematic configuration of the navigation device 200. The navigation device 200 includes an output unit 21, an input unit 22, a storage unit 23, a communication unit 24, and a control unit 25. Each component of the navigation device 200 is connected to each other via a bus which is not shown in the drawing and configured to transmit necessary information among each component.

The output unit 21 outputs information for responding to operations by a user ("hereinafter referred to as "navigation user") of the navigation device 200. Concretely, the output unit 21 outputs an image or a moving image and/or executes an audio output based on the control of the control unit 25. The input unit 22 is an interface accepting the input, i.e., the operation of a necessary command or information which the navigation user conducts to the navigation device 200. Concretely, the input unit 22 is made of keys, switches, buttons, a voice input unit for inputting each kind of commands and data.

The storage unit 23 is made of a HDD for example, and is a unit which stores each kind of data such as map data (hereinafter referred to as "map data Dm") which is used in the navigation process. Also, after converting the telephone directory data received from the mobile terminal 100 into a predetermined format, the storage unit 23 stores it. Hereinafter, the telephone directory data stored in the storage unit 23 and the telephone directory data according to the format in which the storage unit 23 stores the telephone directory data is referred to as "telephone directory data Dt2". The telephone directory data Dt2 is generated not only based on information sent from the mobile terminal 100 but also based on the input of the navigation user.

The communication unit 24 sends and/or receives the data to and/or from other devices according to a predetermined protocol. Concretely, the communication unit 24 receives the telephone directory data from the mobile terminal 100 by using PBAP of Bluetooth.

The GPS (Global Positioning System) receiver 26 receives the radio wave 39 for transmitting down link data, including the position measuring data from the plural GPS satellites. The position measuring data is used for detection of the absolute position (hereinafter referred to as "present position") of the vesicle based on the latitude information, and the longitude information.

The control unit 25 includes a CPU, a ROM, and a RAM which are not shown, and executes various kinds of controls of each component in the navigation device 200. The control unit 25 is one example of each of the information obtaining unit, the latitude-longitude information extracting unit, the telephone directory data storing unit, and the display control unit in the present invention as described below.

It is noted that the above-mentioned configuration of the mobile terminal 100 and the configuration of the navigation device 200 are examples and that the configurations to which the present invention can be applied are not limited to the configurations. For example, the navigation device 200 may include a disc drive which reads contents data such as sound data and video data from a disc such as a CD or a DVD to output it besides the above-mentioned configuration. The disc drive may be one of the CD-ROM drive and the DVD-ROM drive, or may be a compatible drive for CD and DVD. In another example, the navigation device 200 may include a self-position measuring device such as an acceleration sensor, an angular velocity sensor and a distance sensor besides the above-mentioned configuration.

### [Control Method]

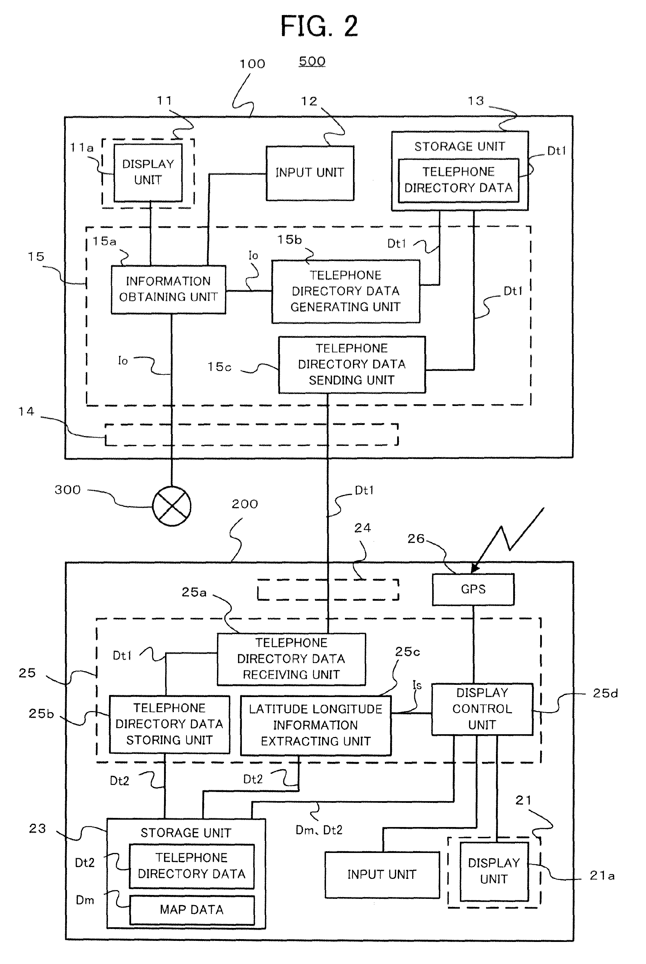

Next, concrete descriptions will be given of the processes which the control unit 15 and the control unit 25 execute in the telephone directory data sharing system 500 with reference to FIG. 2. FIG. 2 is one example of the function blocks of the telephone directory data sharing system 500. Hereinafter, after the process executed by the control unit 15 is described at first, the process executed by the control unit 25 will be described.

First, a description will be given of the process executed by the control unit 15 with reference to FIG. 2. As shown in FIG. 2, the control unit 15 includes an information obtaining unit 15a, a telephone directory data generating unit 15b, and a telephone directory data sending unit 15c.

The information obtaining unit 15a obtains the objective information Io via the communication unit 14 from a server connecting to the communication network 300 based on a manipulated signal supplied from the input unit 12. At that time, the information obtaining unit 15a controls the output of the display unit 11a based on the manipulated signal supplied from the input unit 12.

This process will be described by using a concrete example. For example, it is assumed that, by inputting a predetermined input to the input unit 12, the terminal user has accessed a gourmet website which exists on the Internet by using a browser. At that time, the information obtaining unit 15a lets the display unit 11a execute a map display showing a location of a store (hereinafter referred to as "store A") specified by the terminal user based on the input of the terminal user. Furthermore, in a case where the terminal user conducts an input for generating the telephone directory data Dt1 of the store A, the information obtaining unit 15a obtains necessary information for generating the telephone directory data Dt1 as the objective information Io. For example, in the above mentioned example, the information obtaining unit 15a obtains the name of the store A, the telephone number of the store A, and the latitude-longitude information Is of the store A as the objective information Io.

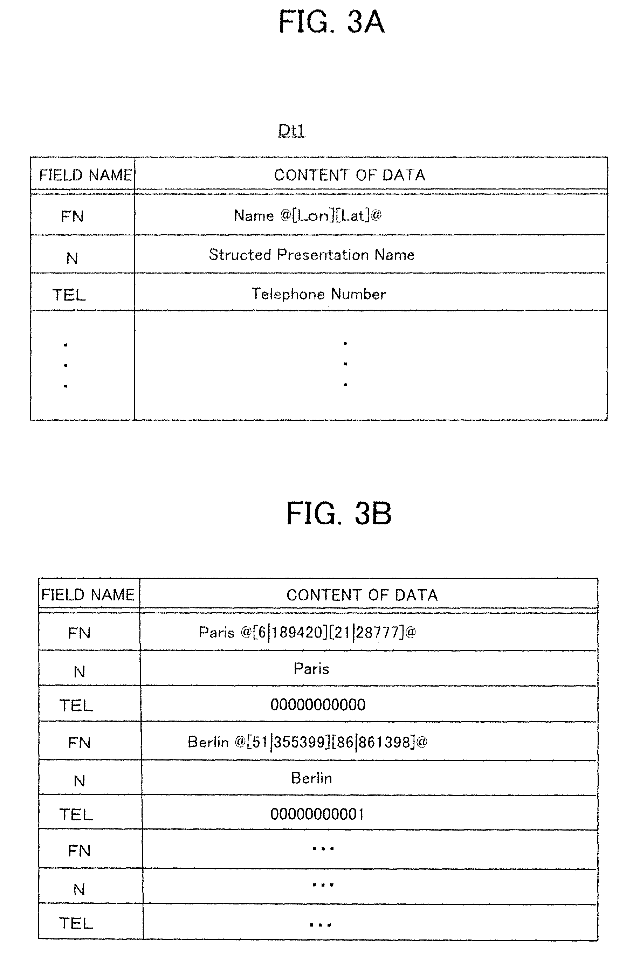

Next, a description will be given of the process executed by the telephone directory data generating unit 15b. The telephone directory data generating unit 15b generates the telephone directorydata Dt1 in the vCard format from the objective information Io supplied from the information obtaining unit 15a and stores it in the storage unit 13. At that time, the telephone directory data generating unit 15b inserts the latitude-longitude information Is into the name field. This will be described with reference to FIGS. 3A and 3B.

FIG. 3A is an example of a data structure of the telephone directory data Dt1. InFIG. 3A, the column at the left side indicates identification symbols (field names) corresponding to the data to be stored, and the column at the right side indicates the content of the data stored in the field corresponding to each field name. As shown in FIG. 3A, the telephone directory data Dt1 includes the "FN" field which stores a name, the "N" field which stores a part of the accordingly extracted, and the "TEL" field which stores the telephone number.

As shown in FIG. 3A, the telephone directory data generating unit 15b inserts "@[Lon] [Lat]@" into the rear of "Name" in the FN field. Here, "Name" indicates information of a name, and "Lon" indicates a numerical value of longitude or an encrypted character string thereof, and "last" indicates a numerical value of latitude or an encrypted character string thereof. Also, the telephone directory data generating unit 15b inserts a symbol "@" (hereinafter, referred to as "special symbol") in front and back of the latitude-longitude information Is for isolating the latitude-longitude information Is in order to properly distinguish between the name and the latitude-longitude information Is. It is noted that the special symbol may be another symbol or a combination of other symbols instead of "@". Also, the special symbol may be inserted into either one of the front or the back of the latitude-longitude information Is as long as the name and the latitude-longitude information Is can be distinguished.

FIG. 3B shows a concrete example of the telephone directory data Dt1 stored in a list form. In FIG. 3B, two real values of the telephone directory data Dt1 are shown. In the FN field in the upper area of the telephone directory data Dt1 in which the name is "paris", the string "[6|189420] [21|28777]" corresponding to the latitude-longitude information Is is inserted in the rear of "paris". Similarly, in the FN field in the lower area of the telephone directory data Dt1 in which the name is "Berline", the string "[51|355399] [86|861398]" corresponding to the latitude-longitude information Is is inserted in the rear of "Berlin".

As described above, by inserting the latitude-longitude information Is into the FN field, the telephone directory data generating unit 15b certainly supplies the navigation device 200 with the latitude-longitude information Is and can let the navigation device 200 utilize it. It is noted that a description will be given of an example in which the navigation device 200 utilizes the latitude-longitude information Is, later. Then, the telephone directory data generating unit 15b stores the generated telephone directory data Dt1 in the storage unit 13.

Next, a description will be given of the process executed by the telephone directory data sending unit 15c. The telephone directory data sending unit 15c sends the telephone directory data Dt1 stored in the storage unit 13 automatically or on the basis of the operation of the terminal user when it establishes the communication with the navigation device 200 by Bluetooth. At that time, the telephone directory data sending unit 15c sends the telephone directory data Dt1 to the navigation device 200 by the communication unit 14 by using PBAP. The telephone directory data Dt1 sent at that time may be one piece of the telephone directory data Dt1 or the entirety of the telephone directory data Dt1 stored in the storage unit 13.

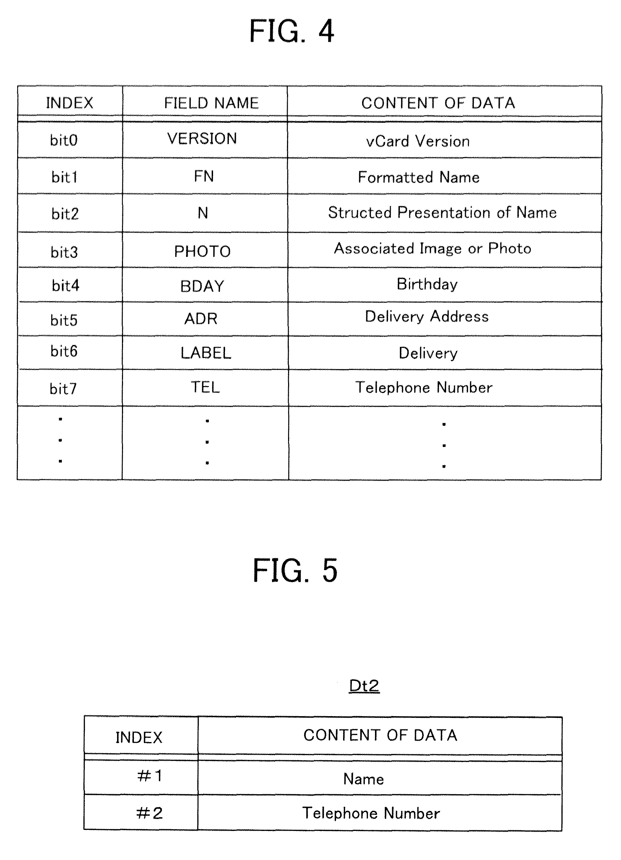

Here, the format of the PBAP will be described below with reference to FIG. 4. FIG. 4 shows a part of the format of PBAP. In FIG. 4, the column at the left side indicates the index, the column in the middle indicates the field name, and the column at the right side indicates the content of the data stored in the field corresponding to each field name. It is noted that mandatory fields designated as essential components are "FN" field, "N" field, and "TEL" field.

As describe above, the latitude-longitude information Is is stored in the FN field which is a mandatory field. Therefore, the telephone directory data sending unit 15c can store the latitude-longitude information Is in the mandatory field and send it to the navigation device 200.

On the other hand, in a case where the latitude-longitude information Is is sent in a condition of being stored in a field which is not mandatory, there is a possibility that the latitude-longitude information Is is discarded depending on the format of the telephone directory data Dt2 which the navigation device 200 has. In consideration of the above fact, in the embodiment, by sending the latitude-longitude information Is in the condition of being stored in the mandatory field, the telephone directory data sending unit 15c can certainly prevent the navigation device 200 from discarding the latitude-longitude information Is.

Next, a description will be given of a process executed by the control unit 25 with reference to FIG. 2 again. As shown in FIG. 2, the control unit 25 includes a telephone directory data receiving unit 25a, a telephone directory data storing unit 25b, a latitude-longitude information extracting unit 25c, and a display control unit 25d.

First, the telephone directory data receiving unit 25a receives the telephone directory data Dt1 sent from the mobile terminal 100 by PBAP. via the communication unit 24. Then, the telephone directory data receiving unit 25a supplies the received telephone directory data Dt1 to the telephone directory data storing unit 25b.

The telephone directory data storing unit 25b converts the supplied telephone directory data Dt1 into a predetermined format and stores it in the storage unit 23 as the telephone directory data Dt2. This will be described with reference to FIG. 5.

FIG. 5 shows a data structure of the telephone directory data Dt2 stored in the storage unit 23. In FIG. 5, the column at the left side indicates the index, and the column at the right side indicates the context of the stored data corresponding to each index.

The telephone directory data Dt2 includes only two fields, where one field corresponds to "Name" in FIG. 5 and stores a name, and the other field corresponds to "Telephone Number" in FIG. 5 and stores a telephone number. Therefore, the telephone directory data storing unit 25b extracts only the FN field and the TEL field from the fields in the telephone directory data Dt1 supplied from the mobile terminal 100 by PBAP. and stores them in the storage unit 23 as the telephone directory data Dt2. Here, the latitude-longitude information, Is is stored in the FN field as described above. Thus, the navigation device 200 can certainly store the latitude-longitude information Is in the storage unit 23 without discarding it even in the format in which the telephone directory data Dt2 has only the minimum fields as shown in FIG. 5.

Next, a description will be given of a process executed by the latitude-longitude information extracting unit 25c. The latitude-longitude information extracting unit 25c extracts the latitude-longitude information Is from the telephone directory data Dt2 stored in the storage unit 23 on the basis of a request of the display control unit 25d. At that time, the latitude-longitude information Is is stored in the index "#1" of the telephone directory data Dt2 shown in FIG. 5 in the same format as the FN field of the telephone directory data Dt1 in FIG. 3A. Namely, the latitude-longitude information Is is clearly distinguished from the name information by the special symbol "@". Therefore, the latitude-longitude information extracting unit 25c can easily extract the latitude-longitude information Is by extracting a part sandwichedbetween the special symbols "@". Then, the latitude-longitude information extracting unit 25c supplies the extracted latitude-longitude information Is to the display control unit 25d.

Next, the process executed by the display control unit 25d will be described below. The display control unit 25d controls the display on the display unit 21a based on the map data Dm, the information, of the present position supplied from the GPS receiver 26, and/or the input to the input unit 22 by the navigation user. Specially, in the embodiment, the display control unit 25d displays a list (hereinafter, referred to as "contacts list") of the telephone directory data Dt2 based on the operation of the navigation user, and executes a map display based on the latitude-longitude information Is supplied from the latitude-longitude information extracting unit 25c.

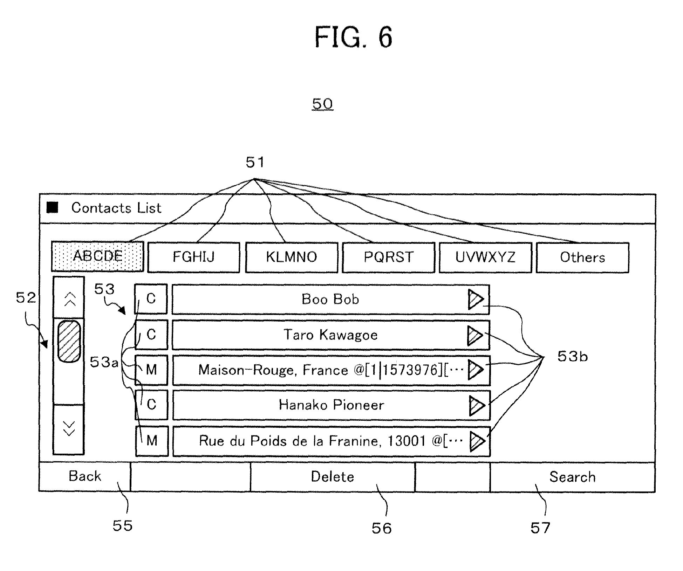

This concrete example will be given with reference to FIG. 6. FIG. 6 is one example of the display screen 50 of the contacts list outputted by the navigation device 200. The display screen 50 is automatically displayed based on the operation by the navigation user or at the time of generating the telephone directory data Dt2, for example. It is noted that the display screen 50 has a touch panel thereby to accept the input based on the push down to the display screen 50 by the navigation user, for example.

As shown in FIG. 6, the display screen 50 includes a menu list 51, a scroll bar 52, a contacts list 53, and buttons 55 to 57 corresponding to each operation command.

The menu list 51 is a menu which classifies the contacts lists 53 on the basis of a predetermined relevance. On the display screen 50, a state in which the "ABCDE" menu is selected from the menu list 51 is shown as one example. The scroll bar 52 visualizes the displayed portion in the overall contacts list 53 in a case where the overall contacts list 53 cannot be displayed on the screen.

The contacts list 53 has a classification display field 53a and a name display field 53b. The classification display field 53a is a display area for identifying whether or not the telephone directory data Dt2 includes the latitude-longitude information Is. In the example shown in FIG. 6, the mark "M" indicates an item corresponding to the telephone directory data Dt2 which includes the latitude-longitude information Is, and mark "C" indicates an item corresponding to the telephone directory data Dt2 which does not include the latitude-longitude information Is. Thereby, the display control unit 25d can let the navigation user easily identify whether or not each item in the contacts list indicates the telephone directory data Dt2 which includes the latitude-longitude information Is. Therefore, the display control unit 25d can prevent the navigation user from an operation mistake. This detailed explanation will be described in the following operation example. The name display field 53b is an area where the content corresponding to the index "#1" in the telephone directory data DT2 is displayed.

The operation command "Back" corresponding to the button 55 is an interface by which the navigation user instructs the transition to the previous screen image. The operation command "Delete" corresponding to the button 56 is an interface for deleting an item selected from the contacts list 53 and the telephone directory data Dt2 corresponding to the item. The operation command "Search" corresponding to the button 57 is an interface for displaying detailed information of the telephone directory data Dt2 selected from the contacts list 53 by the navigation user.

Next, a description will be given of an example of the operation by the navigation user after the display screen 50 is displayed. For example, when the navigation user selects an item in which the display of the classification display field 53a is "M" from the contacts list 53, the display control unit 25d orders the latitude-longitude information extracting unit 25c to extract the latitude-longitude information Is in the telephone directory data Dt2 corresponding to the selected item. Then, the display control unit 25d executes a map display including the latitude-longitude information Is based on the latitude-longitude information Is supplied from the latitude-longitude information extracting unit 25c. Also, the display control unit 25d additionally accepts a destination setting or a transit point setting after the display of the map.

In another example, when the navigation user selects an item in which the display of the classification display field 53a is "C" from the contact list 53, the dis play control unit 25d extracts the telephone number from the telephone directory data Dt2 indicated by the selected item. Then, the display control unit 25d displays the telephone number on the screen or calls by designating the telephone number.

In the above example of the operation, the display control unit 25d changes the following process to be executed depending on whether or not the item designated by the navigation user includes the latitude-longitude information Is. Even in this case, the display control unit 25d clearly displays whether or not each item includes the latitude-longitude information Is by the classification display field 53a thereby to certainly prevent the navigation user from an operation mistake. In other words, the display control unit 25d can prevent executing the map display in a case where the navigation user has an intention to make a phone call, or can prevent making a phone call by using the telephone number in a case where the navigation user has an intention to execute the map display.

As described above, the telephone directory data sharing system in the embodiment includes a mobile terminal and a navigation device. The mobile terminal stores the telephone directory data in the vCard format. The navigation device exchanges the telephone directory data by Bluetooth. The mobile terminal includes an information obtaining unit, a telephone directory data generating unit, and a telephone directory data supplying unit. The information obtaining unit obtains objective information including latitude-longitude information based on an external input. The telephone directory data generating unit generates telephone directory data in which the latitude-longitude information is inserted into a field of a name and/or a field of a telephone number. The navigation device includes a telephone directory data obtaining unit and a latitude-longitude information extracting unit. The telephone directory data obtaining unit obtains the telephone directory data supplied from the mobile terminal by Bluetooth. The latitude-longitude information extracting unit extracts latitude-longitude information from the telephone directory data which is obtained. Thereby, the navigation device can certainly obtain the latitude-longitude information from the mobile terminal and utilize it. After that time, for example, the navigation device executes a map display based on the latitude-longitude information, and registers the point where the latitude-longitude information, indicates on the map, and sets it as a destination and/or a transit point. As described above, the telephone directory data sharing system can let the terminal device and the navigation device share the telephone directory data including the latitude-longitude information properly and synchronize the telephone directory data.

### (Process Flow)

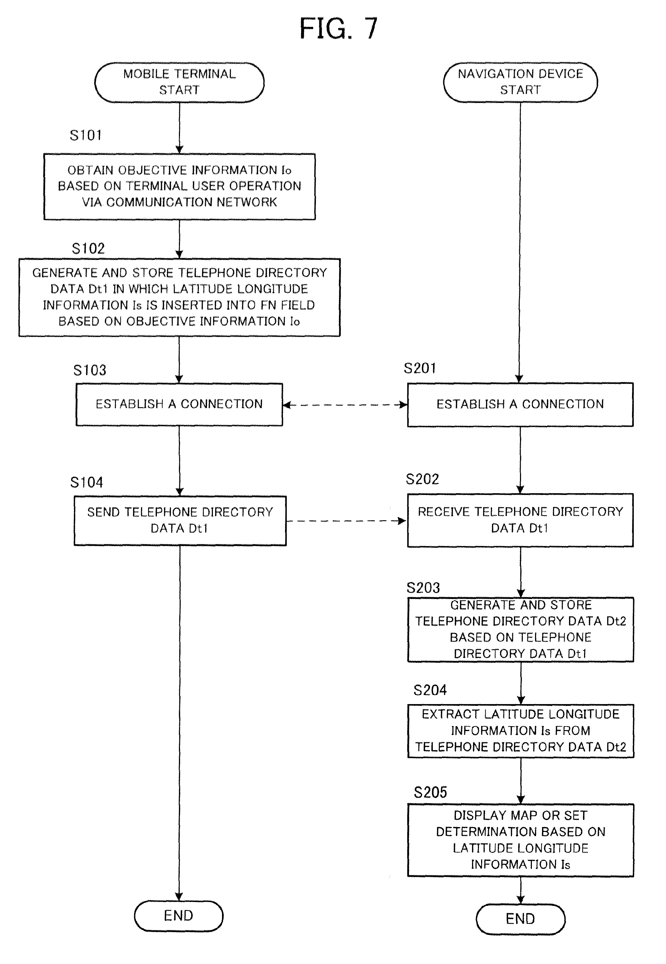

Next, a description will be given of procedures of the processes by the mobile terminal 100 and the navigation device 200 in the embodiment with reference to FIG. 7. FIG. 7 is one example of a flow chart which shows the procedures of the processes executed by the mobile terminal 100 and the navigation device 200 in the embodiment. The mobile terminal 100 and the navigation device 200 repeatedly execute the flow chart shown in FIG. 7 in a predetermined cycle.

First, the mobile terminal 100 obtains the objective information Io via the communication network 300 based on the operation of the terminal user (step S101). For example, the mobile terminal 100 obtains a name which the terminal user designates such as a store name and also obtains its telephone number and its latitude-longitude information Is based on a result for which the terminal user executes a key word search by a browsing software from the Internet.

Next, the mobile terminal 100 generates and stores the telephone directory data Dt1, in which the latitude-longitude information Is is inserted into the FN field, based on the objective information Io (step S102). Concretely, the mobile terminal 100 converts the objective information Io into the format shown in FIG. 3A, and stores it in the storage unit 13 as the telephone directory data Dt1.

Then, the mobile terminal 100 and the navigation device 200 establish a connection (step S103, step S201). Concretely, the terminal user moves the mobile terminal 100 close to the navigation device 200 within a predetermined range where a communication by Bluetooth is available thereby to establish the connection.

Then the mobile terminal 100 sends the telephone directory data Dt1 (step S104). Concretely, by using PBAP, the mobile terminal 100 sends the navigation device 200 the telephone directory data Dt1 stored in the storage unit 13.

Next, the navigation device 200 receives the telephone directory data Dt1 (step S202). Then, the navigation device 200 generates and stores the telephone directory data Dt2 based on the received telephone directory data Dt1 (step S203). Concretely, the navigation device 200 generates the telephone directory data Dt2 in the format shown in FIG. 5 from the telephone directory data Dt1 in the format shown in FIG. 3A and stores it in the storage unit 23. Even in this case, the navigation device 200 can store the latitude-longitude information Is in the storage unit 23 without discarding it.

Then, the navigation device 200 extracts the latitude-longitude information Is from the telephone directory data Dt2 (step S204). In the above-mentioned example, the latitude-longitude information Is is distinguished from the name by the special symbol "@". Therefore, the navigation device 200 can easily extract the latitude-longitude information Is from the telephone directory data Dt2.

Next, the navigation device 200 displays a map or sets a destination based on the latitude-longitude information Is (step S205). As described above, according to the telephone directory data sharing system 500, the navigation device 200 can certainly receive the telephone directory data Dt1 including the latitude-longitude information Is generated by the mobile terminal 100 and can execute a map display based on the latitude-longitude information Is.

### [First Modification]

In the explanation with reference to Fig. 1, the mobile terminal 100 communicates with the navigation device 200 by Bluetooth, and then exchanges the telephone directory data Dt1. However, a configuration to which the present invention can be applied is not limited to this configuration. Instead of this, the mobile terminal 100 may connect to the navigation device 200 by a wired connection such as a cable and then send the telephone directory data Dt1 to the navigation device 200, for example. In another example, the terminal user or the navigation user supplies the telephone directory data Dt1 stored in the mobile terminal 100 to the navigation device 200 via a recording medium. Even in these cases, by inserting the latitude-longitude information Is into the field (FN field) which stores the name information at the time of generating the telephone directory data Dt1, the mobile terminal 100 can certainly supply the latitude-longitude information Is to the navigation device 200 and let the navigation device 200 utilize it.

### [Second Modification]

In the above explanation with reference to FIG. 3, the latitude-longitude information Is is inserted into the FN field. However, a configuration to which the present invention can be applied is not limited to this configuration. For example, Instead of this, or besides this, the mobile terminal 100 may insert the latitude-longitude information Is into the TEL field which stores a telephone number. Even in this case, the mobile terminal 100 inserts the latitude-longitude information Is into the TEL field so that the latitude-longitude information Is can be distinguished from the information of the telephone number by using the special symbol. Thereby, the present invention can be preferably implemented as well.

### [Third Modification]

In the configuration shown in FIG. 1, the telephone directory data sharing system, 500 includes the mobile terminal 100 and the navigation device 200. However, instead of the mobile terminal 100, the telephone directory data sharing system 500 may include a terminal device capable of obtaining the latitude-longitude information Is via a communication network such as the Internet or by itself and storing the telephone directory data Dt1 such as a PC and a camera having a function of GPS. Even in this case, in the telephone directory data sharing system 500, the terminal device and the navigation device 200 exchange the telephone directory data Dt1, into which the latitude-longitude information Is is inserted, with each other by Bluetooth or the communication means mentioned in the first modification.

### [Forth Modification]

In the explanation in the above section "Control Method", the telephone directory data storing unit 25b is supplied with the telephone directory data Dt1 from the telephone directory data receiving unit 25a and stores the telephone directory data Dt2 in the storage unit 23. However, a configuration to which the present invention can be applied is not limited to this configuration. Instead of this, after receiving the telephone directory data Dt1, the navigation device 200 may display the received telephone directory data Dt1 or its modified content on the display unit 21a without storing it. In this case, the telephone directory data receiving unit 25a supplies the telephone directory data Dt1 sent by the mobile terminal 100 to the latitude-longitude information extracting unit 25c and/or the display control unit 25d without supplying it to the telephone directory data storing unit 25b. After that, the display control unit 25d executes a map display based on the latitude-longitude information Is or displays the content of the received telephone directory data Dt1, for example.

### [Fifth Modification]

In the example of the operation in FIG. 6, the display control unit 25d executes a map display by using the latitude-longitude information Is when the navigation user selects an item of the telephone directory data Dt2 including the latitude-longitude information, Is. Instead of this, the display control unit 25d may control the display so that the navigation user can use the telephone number even though the telephone directory data Dt2 includes the latitude-longitude information Is.

For example, the display control unit 25d displays the telephone directory data Dt2 including the latitude-longitude information Is in two parts, in which one part is an item which the navigation user designates at the time of using the telephone number and the other part is an item which the navigation user designates at the time of using latitude-longitude information Is. Then, the display control unit 25d displays the telephone number or makes a call by designating the telephone number when the navigation user selects the item in which the telephone number is supposed to be used. Meanwhile, the display control unit 25d executes a map display similarly to the embodiment when the navigation user selects the item in which the latitude-longitude information Is is supposed to be used. In another example, the display control unit 25d may additionally display menus for selecting whether or not to use the telephone number or to execute a map display by using the latitude-longitude information Is when the navigation user selects the item of the telephone directory data Dt2, which includes the latitude-longitude information Is, by using the display screen 50.

### BRIEF DESCRIPTION OF THE REFERENCE NUMBER

- 11, 21: Output units
- 12, 22: Input units
- 13, 23: Storage units
- 14, 24: Communication units
- 15, 25: Control unit
- 26: GPS
- 100: Mobile terminal
- 200: Navigation device
- 300: Communication network
- 500: Telephone directory data sharing system

## Claims

1. A telephone directory data sharing system comprising:
a terminal device which stores telephone directory data in a predetermined format; and
a navigation device which exchanges telephone directory data with the terminal device by an electromagnetic means,
wherein the terminal device comprises:
an information obtaining unit which obtains objective information including latitude-longitude information based on an external input;
a telephone directory data generating unit which generates telephone directory data, in which the latitude-longitude information is inserted into a field of a name and/or a field of a telephone number, based on the objective information; and
a telephone directory data supplying unit which supplies the telephone directory data to the navigation device, and
wherein the navigation device comprises:
a telephone directory data obtaining unit which obtains the telephone directory data supplied from the telephone directory data supplying unit; and
a latitude-longitude information extracting unit which extracts the latitude-longitude information from the obtained telephone directory data.

2. The telephone directory data sharing system according to claim 1,
wherein the telephone directory data generating unit arranges the latitude-longitude information to follow information of the name or the telephone number and adds a symbol for distinguishing the latitude-longitude information from the name or the telephone number to front and/or back of the latitude-longitude information, in case of inserting the latitude-longitude information into the field.

3. The telephone directory data sharing system according to claim 1 or 2,
wherein the navigation device further comprises:
a storage unit; and
a telephone directory data storing unit which generates new telephone directory data by extracting the field of the name and the field of the telephone number from the telephone directory data obtained by the telephone directory data obtaining unit and which stores the new telephone directory data in the storage unit.

4. The telephone directory data sharing system according to claim 3,
wherein the navigation device further comprises:
a display unit; and
a display control unit which displays a list of the telephone directory data stored in the storage unit and which adds a display for identifying whether or not the latitude-longitude information is included to each item of the list.

5. The telephone directory data sharing system according to claim 4,
wherein the display control unit executes a map display on the display unit based on the latitude-longitude information in a case where the latitude-longitude information is included in an item designated from the list based on an external input.

6. A navigation device which is supplied with telephone directory data, in which latitude-longitude information is inserted into a field of a name and/or a field of a telephone number, from a terminal device by an electromagnetic means, comprising:
a telephone directory data obtaining unit which obtains the telephone directory data from the terminal device; and
a latitude-longitude information extracting unit which extracts the latitude-longitude information from the telephone directory data.

7. The navigation device according to claim 6, further comprising:
a storage unit; and
a telephone directory data storing unit which generates new telephone directory data by extracting the field of the name and the field of the telephone number from the telephone directory data obtained by the telephone directory data obtaining unit and which stores the new telephone directory data in the storage unit.

8. The navigation device according to claim 7, further comprising:
a display unit; and
a display control unit which displays a list of the telephone directory data stored in the storage unit and which adds a display for identifying whether or not the latitude-longitude information is included to each item of the list.

9. The navigation device according to claim 8, wherein the display control unit executes a map display on the display unit based on the latitude-longitude information in a case where the latitude-longitude information is included in an item designated from the list based on an external input.

10. A terminal device which exchanges telephone directory data with a navigation device by an electromagnetic means, comprising:
an information obtaining unit which obtains objective information including latitude-longitude information based on an external input;
a telephone directory data generating unit which generates telephone directory data, in which the latitude-longitude information is inserted into a field of a name and/or a field of a telephone number, based on the objective information; and
a telephone directory data supplying unit which supplies the telephone directory data to the navigation device.

11. The terminal device according to claim 10, wherein the telephone directory data generating unit adds a symbol for distinguishing the latitude-longitude information from the name or the telephone number to front and/or back of the latitude-longitude information in case of inserting the latitude-longitude information into the field.

12. A program executed by a navigation device supplied with telephone directory data, in which latitude-longitude information is inserted into a field of a name and/or a field of a telephone number, from a terminal device by an electromagnetic means, making the navigation device function as:
a telephone directory data obtaining unit which obtains the telephone directory data from the terminal device; and
a latitude-longitude information extracting unit which extracts the latitude-longitude information from the telephone directory data.

13. A program executed by a terminal device which exchanges telephone directory data with a navigation device by an electromagnetic means, comprising:
an information obtaining unit which obtains objective information including latitude-longitude information based on an external input;
a telephone directory data generating unit which generates telephone directory data, in which the latitude-longitude information is inserted into a field of a name and/or a field of a telephone number, based on the objective information; and
a telephone directory data supplying unit which supplies the telephone directory data to the navigation device.

14. A recording medium which records the program according to claim 12 or 13.
